# EUROPEAN PATENT SPECIFICATION

(11) **EP 4 257 823 B1**
(45) Date of publication and mention of the grant of the patent: **07.10.2026**
(21) Application number: 23165271.0
(22) Date of filing: 29.03.2023
(51) Int. Cl.: F03D 17/00, F03D 7/02

(54) **METHOD AND SYSTEM FOR DETERMINING AND TRACKING WIND TURBINE TOWER DEFLECTION**
VERFAHREN UND SYSTEM ZUR BESTIMMUNG UND VERFOLGUNG DER WINDTURBINENTURMABLENKUNG
PROCÉDÉ ET SYSTÈME DE DÉTERMINATION ET DE SUIVI DE DÉVIATION DE TOUR D'ÉOLIENNE

(30) Priority: 04.04.2022 US 202217712321
(43) Date of publication of application: 11.10.2023
(73) Proprietor: General Electric Renovables España, S.L., 08005 Barcelona (ES)
(72) Inventor: Landa, Bernard P., Schenectady, NY, 12345 (US); Bonanni, Pierino Gianni, Niskayuna, NY, 12309 (US)
(74) Representative: Zimmermann & Partner Patentanwälte mbB

(56) References cited:
- US-A1- 2014 278 076
- US-B1- 11 199 175
- US-B2- 10 634 120

## Description

### FIELD

The present subject matter relates generally to wind turbine towers and, more particularly, to a method and system to track deflection of the wind turbine tower.

### BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy from wind using known airfoil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

As hub sizes and heights continue to increase along with size and capacity of wind turbines, the steel tower that supports the hub becomes an increasingly critical component. A key consideration to the integrity of the wind turbine is the tower deflection as it influences mechanical reaction loads, blade tip clearance, and life cycle fatigue. In addition, the monitoring and tracking of tower deflections is a useful tool for operational control of mechanical loads and power capture.

The top of the tower during a no-load or idle state behaves as a neutral pivot point, which is a deflection-free position of the tower top about which the nacelle (including the machine head and rotor) rotates. Over time, the loads and other conditions affecting the tower mentioned above may cause this pivot point to deflect in a fore-aft, side-to-side, or torsional manner. Long-time variations in the pivot point (which may be permanent deflections) are an indication of tower structure and/or foundation changes over time. Short-time variations in the pivot point are an indication of oscillatory motion of the tower from rotor and/or drive train loads.

Motion of the tower top is difficult to model or infer and use reliably in feedback control for a wind turbine. Key factors of operational concern for tower deflection monitoring are rotor thrust, maximum deflection (fore-aft, side-to-side), and dynamic coupling of frequency modes. Current methods for monitoring rotor thrust represent the blades on a wind turbine in a nominal and idealized operating condition. However, variability in blade aerodynamics and system interactions result in variation in structural loading and power performance, both critical to wind turbine operability. Tower deflection is an indicator of rotor loading and provides a means of observing variation in rotor performance, sub-optimal turbine operation, and other conditions that may require maintenance/repair. Document US 11 199 175 B1 relates to a method and system for determining and tracking the top pivot point of a wind turbine tower.

It would be desirable to accurately detect and track deflection of the wind turbine tower via establishment of a known geographic reference position for the tower top pivot point or other fixed location relative to the tower (e.g., a fixed location on the tower top or the nacelle) and to track changes in this position over time. This information would be useful for monitoring the integrity of the steel structure and tower foundation and for control and management of structural and operational loads that may cause deflection and decrease the life of the tower and other wind turbine components. Modeling methods can be applied utilizing the deflections of the tower top pivot point or other fixed location to determine the fore/aft and side-to-side deflections of the tower top and the associated reactionary loads.

The present invention provides a solution for accurately determining the tower top pivot point for a wind turbine tower.

### BRIEF DESCRIPTION

Aspects and advantages of the invention will be set forth in part in the following description, or may be obvious from the description, or may be learned through practice of the invention.

In one aspect, the present disclosure is directed to a method for determining deflection of a tower of a wind turbine, the wind turbine including a nacelle with a machine head and a rotor atop of the tower. The method includes establishing a fixed location relative to the tower, and then detecting a total deflection of a geographic location ("geo-location") of the fixed location. The method then determines components of the total deflection that are generated by non-thrust loads acting on the tower. The deflection components from the non-thrust loads are subtracted from the total deflection to determine a thrust loads deflection component corresponding to deflection of the tower from operational thrust loads on the rotor.

**In** a particular embodiment, the thrust loads deflection component is used directly as a control variable for performing one or more of: changing an operating parameter of the wind turbine based on a difference between an expected thrust loads deflection component and the determined thrust loads deflection component; performing a repair or maintenance procedure based on a difference between the expected thrust loads deflection component and the determined thrust loads deflection component; determining tower or foundation integrity; or making a tower or foundation life prediction, based on a difference between the expected thrust loads deflection component and the determined thrust loads deflection component.

**In** a certain embodiment, the method may include, from the thrust loads deflection component, determining the rotor thrust resulting from operational loads acting on the rotor, and comparing the determined rotor thrust to an expected rotor thrust for operating conditions of the wind turbine. This embodiment of the method may include performing at least one of: changing an operating parameter of the wind turbine based on a difference between the expected rotor thrust and the determined rotor thrust; performing a repair or maintenance procedure based on a difference between the expected rotor thrust and the determined rotor thrust; or determining tower or foundation integrity, or making a tower or foundation life prediction, based on a difference between the expected rotor thrust and the determined rotor thrust.

The steps of determining and subtracting the non-thrust loads deflection components from the total deflection of the fixed location may include generating and applying a tower displacement correction factor to a vector of the total deflection prior to determining the geo-location of the fixed location. This tower distortion correction factor may correct for tower displacement caused by any one or combination of: weight overhang of the nacelle relative to a vertical axis of the tower; thermal tower distortion caused by temperatures differences between sides of the tower; or tower distortion from transient loads placed on the tower or nacelle.

In a particular embodiment, the step of detecting the total deflection of the geo-location of the fixed location may include: (a) configuring at least one rover receiver of a global navigation satellite system (GNSS) at a fixed position on the nacelle or on the tower; (b) based on a GNSS geo-location of the rover receiver and a known position of the fixed location relative to the rover receiver, computing, via the controller, the geo-location of the fixed position; and (c) repeating steps (a) through (b) at least once more over a fixed time period and determining a total trajectory or displacement vector of the fixed location over the time period that represents the total deflection of the tower. With this embodiment, the rover receiver may be in communication with a fixed base station receiver that transmits correction data to the rover receiver, wherein the GNSS geo-location of the rover is determined relative to the base station.

The GNSS geo-location of the rover receiver may be an absolute global latitude and longitude position supplied directly to the rover receiver.

In a certain embodiment, the fixed location relative to the tower corresponds to a tower top pivot point (TPP) of the tower, wherein the step of detecting the total deflection of the geo-location of the TPP of the tower may include: (a) configuring at least one rover receiver of a global navigation satellite system (GNSS) at a fixed position on the nacelle; (b) conducting a plurality of 360-degree yaw sweeps of the nacelle and recording geo-location signals received by the rover receiver during the yaw sweeps; (c) via a controller, converting the geo-location signals into a circular plot and determining a radius of the circular plot, the radius being a distance between the rover receiver and the TPP; (d) based on a GNSS geo-location of the rover receiver and the radius, computing, via the controller, the geo-location of the TPP; and (e) repeating steps (b) through (d) at least once more over a fixed time period and determining a total trajectory or displacement vector of the TPP over the time period that represents the total deflection of the tower.

In this embodiment, the steps of determining and subtracting the non-thrust loads deflection components from the total deflection may include generating and applying a tower displacement correction factor to the radius from the yaw sweeps prior to determining the geo-location of the TPP. The tower distortion correction factor corrects for tower displacement caused by any one or combination of: weight overhang of the nacelle relative to a vertical axis of the tower; thermal tower distortion caused by temperatures differences between sides of the tower; or tower distortion from transient loads placed on the tower or nacelle.

Also with this embodiment, the plurality of 360-degree yaw sweeps may include at least one yaw sweep in a positive direction and at least one yaw sweep in an opposite negative direction. In addition, the plurality of 360-degree yaw sweeps may be conducted during low wind speeds so as to minimize transient wind loads that may cause deflection of the tower during the yaw sweeps.

The method may include locating the rover receiver atop and at a back end of the nacelle at a predetermined fixed distance ("x") to a centerline axis of the nacelle, wherein the geo-location of the TPP along the centerline axis is computed based on the radius of the yaw sweeps and the distance "x". A plurality of the rover receivers may be configured on the nacelle, wherein the location signals from the rover receivers are used to generate the circular plot and determine the radius for each of the rover receivers.

The invention also encompasses a system for determining deflection of a tower of a wind turbine, the wind turbine including a nacelle with a machine head and a rotor atop of the tower. The system includes at least one rover receiver of a global navigation satellite system (GNSS) configured at a fixed position on the nacelle or on the tower. A controller is in communication with the rover receiver, the controller configured to perform the following operations: detecting a total deflection of a geographic location ("geo-location") of a fixed location on the tower; determining components of the total deflection that are generated by non-thrust loads acting on the tower; and subtracting the non-thrust loads deflection components from the total deflection to determine a thrust loads deflection component corresponding to deflection of the tower from operational thrust loads on the rotor.

The controller may be further configured to: (a) based on a GNSS geo-location of the rover receiver and a known position of the fixed location relative to the rover receiver, compute the geo-location of the fixed location; and (b) repeat step (a) at least once more over a fixed time period and determining a total trajectory or displacement vector of the fixed location over the time period that represents the total deflection of the tower.

In particular embodiment of the system, the rover receiver is at a fixed position on the nacelle and the fixed location corresponds to a tower top pivot point (TPP) of the tower. In this embodiment, the controller may be configured to: (a) receive and record geo-location signals from the rover receiver during a plurality of 360-degree yaw sweeps of the nacelle; (b) convert the geo-location signals into a circular plot and determining a radius of the circular plot, the radius being a distance between the rover receiver and the TPP; (c) based on a GNSS geo-location of the rover receiver and the radius, compute the geo-location of the TPP; and (d) repeating steps (a) through (c) at least once more over a fixed time period and determining a total trajectory or displacement vector of the TPP over the time period that represents the total deflection. The controller may be further configured to apply a tower displacement correction factor to the radius from the yaw sweeps based on one or more of: weight overhang of the nacelle relative to a vertical axis of the tower; thermal tower distortion caused by temperatures differences between sides of the tower; and tower displacement from transient loads placed on the tower or nacelle.

The invention will be further supported and described with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Fig. 1 illustrates a perspective view of one embodiment of a wind turbine configured with a system and method in accordance with the present invention;
Fig. 2 is a diagram view of a nacelle configured with sensors to carry out method embodiments of the invention;
Fig. 3 is a diagram view depicting method steps according to an embodiment of the invention;
Fig. 4 is a diagram view depicting further method steps according to an embodiment of the invention;
Fig. 5 is a diagram view depicting still other method steps according to an embodiment of the invention;
Fig. 6 is a diagram view depicting more method steps according to an embodiment of the invention;
Fig. 7 is a diagram view depicting still other method steps according to an embodiment of the invention;
Fig. 8 is a perspective view of an alternative embodiment of a wind turbine configured with a system and method in accordance with the present invention;
Fig. 9 is a diagram view of a tower configured with sensors to carry out alternate method embodiments of the invention; and
Fig. 10 is a diagram view depicting method steps according to an embodiment of the invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

In general, the present subject matter is directed to a method and associated system for determining and tracking a geographic location of a fixed location relative to a wind turbine tower in order to determine deflection of the tower. In a particular embodiment, the fixed location corresponds to a pivot point that is essentially a neutral deflection-free position of the tower top about which the nacelle (including the machine head and rotor) rotates. As described herein, the location and deflection of this tower top pivot point (TPP) provides valuable information for purposes of analyzing and correcting for permanent and transient distortions of the tower.

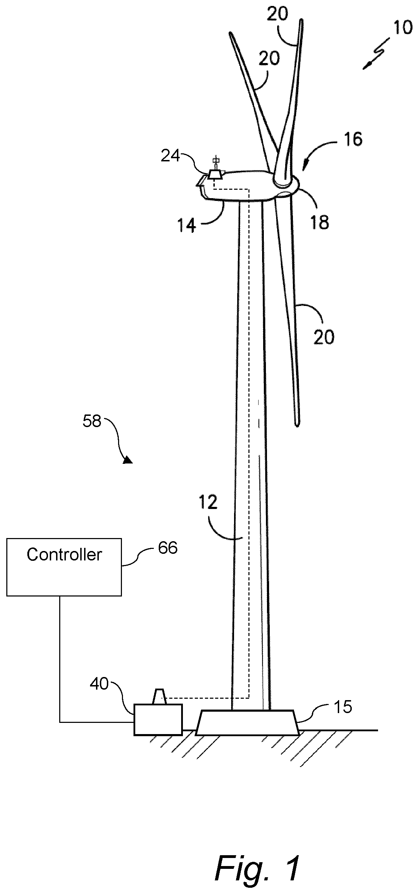

Referring now to the drawings, Fig. 1 illustrates a perspective view of one embodiment of a wind turbine 10 configured with a system 58 for practicing various methods according to the present disclosure. As shown, the wind turbine 10 generally includes a tower 12, a nacelle 14 mounted on the tower 12, and a rotor 16 coupled to the nacelle 14. The rotor 16 includes a rotatable hub 18 and at least one rotor blade 20 coupled to and extending outwardly from the hub 18. For example, in the illustrated embodiment, the rotor 16 includes three rotor blades 20. However, in an alternative embodiment, the rotor 16 may include more or fewer than three rotor blades 20. Each rotor blade 20 may be spaced about the hub 18 to facilitate rotating the rotor 16 to enable kinetic energy to be transferred from the wind into usable mechanical energy, and subsequently, electrical energy. For instance, the hub 18 may be rotationally coupled to an electric generator positioned within the nacelle 14 to permit electrical energy to be produced.

For purposes of the present disclosure, the term "nacelle" is used herein to include machine head components (e.g., drive train components, generator, etc.) located within the nacelle housing and the hub 18 components.

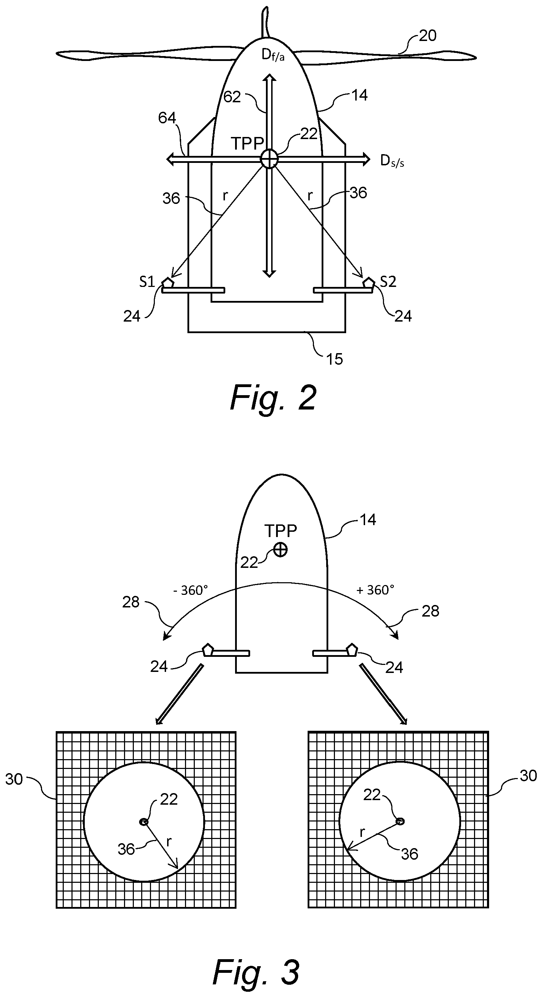

Referring to Figs. 1 and 2, at least one rover receiver 24 of a global navigation satellite system (GNSS) is mounted at a fixed, predetermined position on the nacelle 14. The rover receiver 24 is in direct or indirect communication with a controller 66. In the depicted embodiment, the rover receiver 24 is also in communication with a fixed base station 40, as described in greater detail below. The controller 66 may be a local controller associated with a single wind turbine 10, a farm-level controller associated with a plurality of wind turbines 10 within a wind farm, or a remote controller located, for example, in a remote control/monitoring facility. The controller 66 is configured to carry out various processes, as described in greater detail below, for determining the geo-location of the TPP 22 of the wind turbine tower 12.

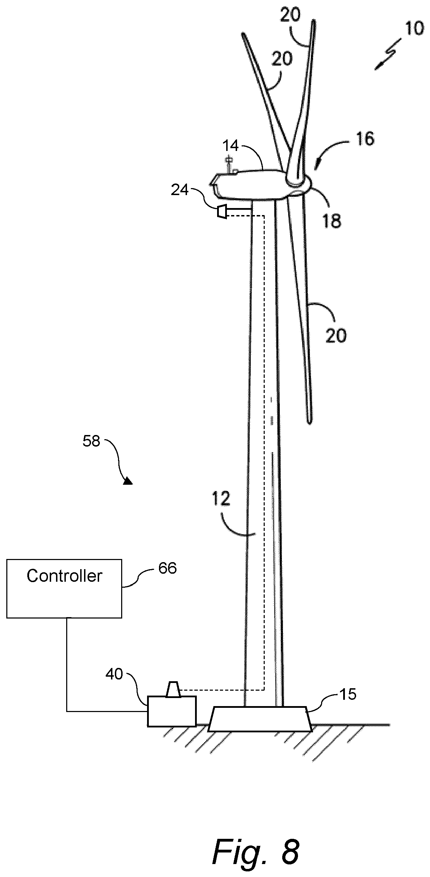

In an alternate embodiment of the wind turbine 10 depicted in Fig. 8, one or more of the rover receivers 24 are mounted at fixed position on the tower 12, desirably at or near the top of the tower 12.

The GNSS system may utilize any of the available satellite-based positioning systems, such as GPS, GLONASS, Galileo, NavIC, and BeiDou. In certain embodiments, the GNSS system may also employ real-time kinematic (RTK) techniques to enhance the precision of the position data derived from the GNSS system. RTK techniques are known to those-skilled in the art. In general, the distance between a satellite navigation receiver (the rover receiver 24) and a satellite can be calculated from the time it takes for a signal to travel from the satellite to the receiver. The accuracy of the resulting range measurement is a function of the receiver's ability to accurately process signals from the satellite, as well as additional error sources such as non-mitigated ionospheric and tropospheric delays, multipath, satellite clock, and ephemeris errors, etc.

RTK techniques use the satellite signal's carrier wave as its signal. RTK uses a fixed base station 40 and the rover 24 to transmit correction data to the rover receiver 24 and reduce the rover's position error. The base station 40 re-broadcasts the phase of the carrier that it observes, and the rover 24 compares its own phase measurements with the one received from the base station. This allows the rover receiver 24 to calculate its relative position with respect to the base station 40 with a high degree of accuracy (typically within millimeters). The accuracy of the geo-location of the rover receiver 24 is thus essentially the same accuracy as the computed position of the base station 40. In essence, the base station 40 is located at a known surveyed location (a benchmark position) and the rover receiver 24 takes a fix relative to the base station 40.

The rover receivers 24 may also be configured with Inertial Navigation System (INS) capability and include inertial navigation elements (e.g., accelerometers, gyros). This on-board INS capability may improve kinematic accuracy (position, velocity, & rotation) by reducing measurement variability at a much higher sample rate.

As mentioned, alternatively, the geo-location of the rover receiver 24 may be based on the absolute global latitude and longitude position supplied directly to the rover from the GNSS satellite(s).

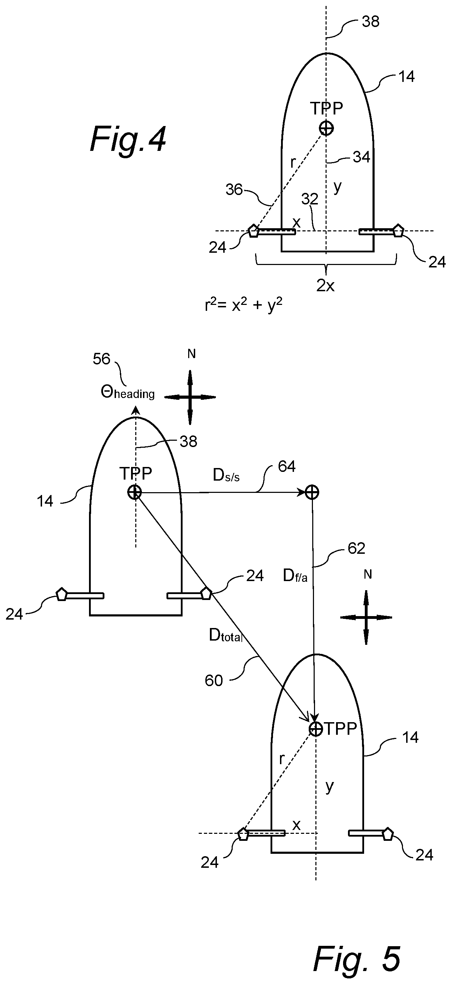

Referring to the embodiment of Figs. 2 and 4, the rover receiver 24 can be located atop and at a back end of the nacelle 14 at a predetermined fixed distance 32 ("x") to a centerline axis 38 of the nacelle. The rover receiver 24 may be mounted so as to extend outboard from the sides of the nacelle 14, as depicted in the figures. For purposes of determining the geo-location of the TPP 22 (in one embodiment of the method) based on the GNSS geo-location of the rover receiver 24, it is reasonably assumed that the TPP 22 lies on (or within an acceptable margin from) the centerline 38 of the nacelle 14.

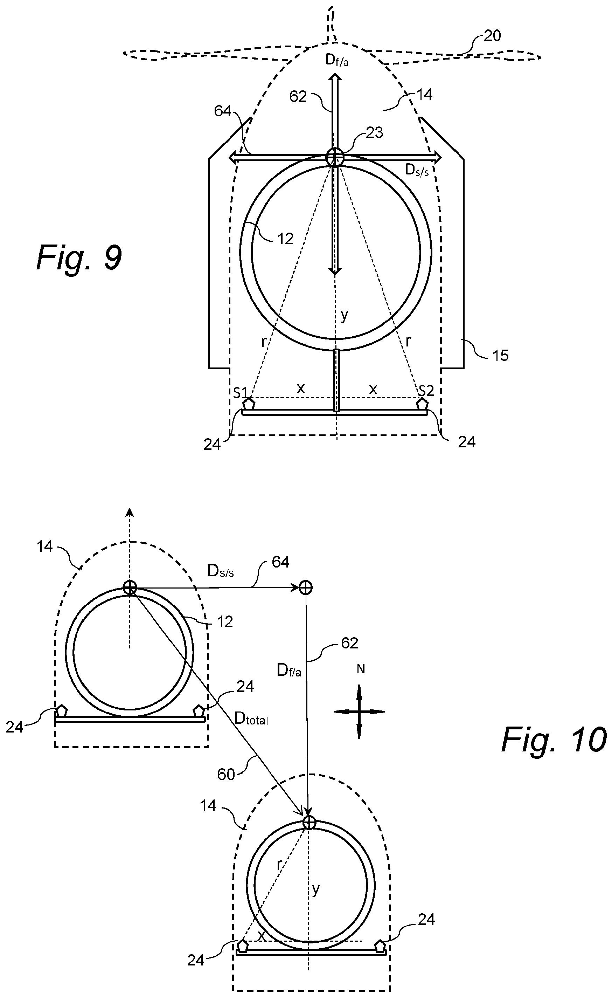

In the alternate embodiment depicted in Figs. 9 and 10, the rover receivers 24 are mounted to frame members attached near or at the top of the tower 12. These rover receivers 24 are at known values of length/distance "r", "x", and "y" relative to a fixed location 23 on the tower 12, which may lie on the line "y" that is at the midpoint "X" distance between the rover receivers 24. The relative position of the fixed location 23 with respect to the rover receivers 24 is thus a known, non-varying spatial value.

In the embodiment of Figs. 2 through 4, the fixed location corresponds to the TPP 22, which must be determined. As depicted in Fig. 3, one method to determine location of the TPP 22 includes conducting a plurality of 360-degree yaw sweeps 28 of the nacelle 14 and recording the geo-location signals received by the rover receiver 24 during the yaw sweeps 28. The plurality of 360-degree yaw sweeps 28 may include one or more yaw sweeps 28 in a positive direction and one or more yaw sweeps 28 in an opposite negative direction. The 360-degree yaw sweeps should be done under low wind speed conditions.

The controller 66 converts the geo-location signals of the rover receiver 24 into a circular plot 30 and determines a radius "r" 36 of the circular plot. This radius 36 corresponds to the distance from the rover receiver 24 to the TPP 22 of the wind turbine tower 12. The controller 66 then uses the length of the radius 36 and the geo-location of the rover receiver 24 to compute a geo-location of the TPP 22. For example, referring to Fig. 4, knowing the distance "x" 32 of the rover receiver 24 from the centerline axis 38 of the nacelle 14 and with the assumption that the TPP lies on the centerline axis 38 at a distance "y" 34 from the line of "x" 32, the length of "y" 34 is readily solved using the relationship for a right-triangle: r²= x² + y². With the values of "x" and "y" determined, the precise geo-location of TPP 22 relative to the geo-location of the rover receiver 24 is then easily determined. The latitude and longitude changes (x and y) to a known geo-location of the rover receiver 24 will give the geo-location of the TPP.

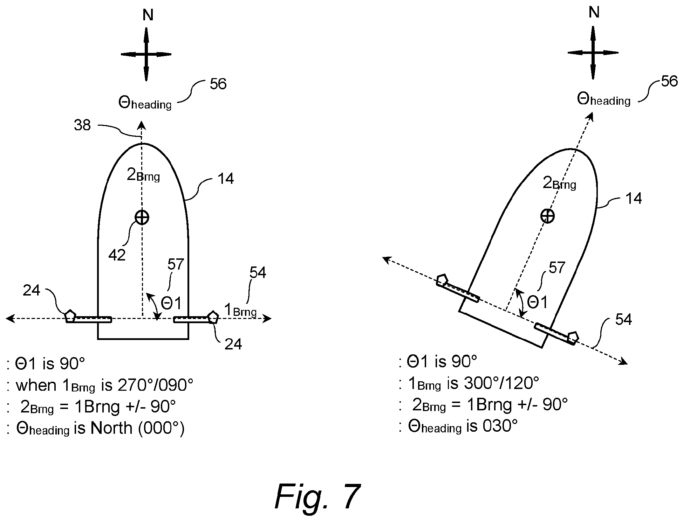

Referring to Fig. 7, generation of the yaw sweeps 28 with two or more of the rover receivers 24 on the nacelle 14, for example two rover receivers 24 at opposite sides of and at a same or different distance "x" from the centerline axis 38 of the nacelle 14, is depicted. The geo-location signals from both of the rover receivers 24 can be used to generate circular plots 30 and determine the radius 36 of the yaw sweeps 28 (Fig. 3). When the distance "x" is the same for each rover, the respective plots 30 should have the same radius 36. A smaller or larger distance "x" will produce a smaller or larger radius plot, respectively. The different radius plots 30 can be used to independently determine the TPP, which provides an accuracy check of the system.

In the embodiment of Figs. 9 and 10, the values of "x" and "y" are simply measured. The latitude and longitude changes (x and y) to the known geo-location of the rover receiver 24 will give the geo-location of the fixed location 22 on the tower.

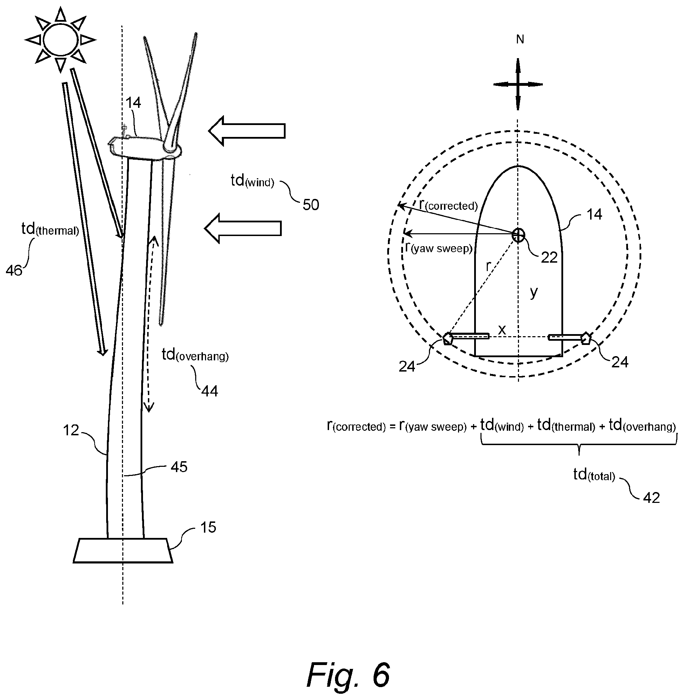

Referring to Fig. 6, certain "non-thrust load" factors acting on the tower 12 can produce permanent or transient distortions in the tower 12 that contribute to the total deflection of the tower. These factors are considered as "non-thrust loads" in that they are not the result of thrust or forces exerted on the tower via power production of the rotor. For purposes of the present invention, it is desired to determine components of the total tower deflection that are attributed to the non-thrust loads or influences and to remove or subtract these non-thrust load deflection components from the total deflection component in order to determine deflection of the tower due solely to operational thrust loads acting on the rotor.

Examples of the non-thrust loads acting on the tower include (but are not necessarily limited to): weight overhang of the nacelle relative to a vertical axis of the tower; thermal tower distortion caused by temperatures differences between sides of the tower; or tower distortion from transient loads placed on the tower or nacelle.

A "clean" value of tower deflection (e.g., the thrust loads deflection component of the total deflection) void of the non-thrust load deflection components can be used as a control variable for various operational conditions of the wind turbine. For example, the thrust loads deflection component may be used directly as a control variable for performing one or more of: changing an operating parameter of the wind turbine based on a difference between an expected thrust loads deflection component and the determined thrust loads deflection component; performing a repair or maintenance procedure based on a difference between the expected thrust loads deflection component and the determined thrust loads deflection component; or determining tower or foundation integrity, or making a tower or foundation life prediction, based on a difference between the expected thrust loads deflection component and the determined thrust loads deflection component.

Alternatively, the thrust loads deflection component can be correlated to an actual rotor thrust resulting from operational loads acting on the rotor, which can then be used as a control variable by comparing the determined rotor thrust to an expected rotor thrust for operating conditions of the wind turbine. The determined rotor thrust can be used to perform any one or combination of: changing an operating parameter of the wind turbine based on a difference between the expected rotor thrust and the determined rotor thrust; performing a repair or maintenance procedure based on a difference between the expected rotor thrust and the determined rotor thrust; or determining tower or foundation integrity, or making a tower or foundation life prediction, based on a difference between the expected rotor thrust and the determined rotor thrust.

Referring to the embodiment of Figs. 2-6, it can be appreciated that the non-thrust loads could affect the accuracy of the initial determination of the radius 36 of the yaw sweeps 28. For example, the center of mass of the nacelle 14 (including the machine head components and the hub 18) is typically not aligned with the centerline 45 of the nacelle 14, but overhangs towards the hub 18, thus creating a permanent moment arm on the tower 12. As the yaw sweeps 28 are conducted, the tower may continuously "lean" towards the hub 18 (indicated by the dashed arrow in Fig. 6). If this "lean" is not accounted for, the radius 36 of the yaw sweep 29 would be decreased by the amount of the "lean". The degree of the "lean" can be determined empirically or through modeling of the nacelle 14 and tower 12. An overhang tower distortion correction factor 44 (td_{(overhang)}) can be computed and applied to the radius 36 of the yaw sweep 28 to give a corrected radius 36.

Still referring to Fig. 6, temperature differences between sides of the tower 12 can result in a thermal distortion of the tower 12. The temperature differential resulting from solar heating of one side of the tower compared to the shaded side of the tower can cause expansion of the heated side and leaning of the tower towards the shaded side. The degree of thermal distortion can be determined empirically or through modeling and used to compute a thermal tower distortion correction factor 46 (td_{(thermary)}) that is applied to the radius 36 of the yaw sweep 28 to give a corrected radius 36.

Still referring to Fig. 6, transient loads on the nacelle 14 caused by wind can also result in distortion of the tower 12, causing the tower to lean away from the direction of the wind. The degree of wind load distortion can be determined empirically or through modeling and used to compute a wind tower distortion correction factor 50 (td_{(wind)}) that is applied to the radius 36 of the yaw sweep 28 to give a corrected radius 36.

All of the distortion correction factors 44, 46, and 50 can be combined into a total distortion factor 42 that is applied to the radius 36 of the yaw sweep 28 to give a corrected radius 36.

In the embodiment of Figs. 9-10, the total distortion factor 42 can be applied as a vector correction to the total deflection vector Dₜₒₜₐₗ.

Referring to the embodiment of Figs. 9-10, the step of detecting the total deflection of the geo-location of the fixed location 23 may include, based on the GNSS geo-location of the rover receiver 24 and a known position of the fixed location 23 relative to the rover receiver 24, computing, via the controller, the geo-location of the fixed position 23 (as discussed above). These steps of determining the geo-location of the of the fixed location 23 may be repeated one or more times over a fixed time period. Changes in the geo-location of the fixed position 23 over the time period corresponds to a total trajectory or displacement vector 60 of the fixed location 23 over the time period, which represents the total deflection of the tower 22. The total displacement vector 60 has a side-to-side component 64 and a fore-aft component 62. Multiple values of the geo-location for the fixed position 23 can be plotted, averaged, or otherwise manipulated to generate the total displacement vector 60 of Fig. 10.

The embodiment of Fig. 7 also enables computing of a heading bearing 56 of the nacelle 14. The heading bearing 56 can be used by the wind turbine control system for yaw control of the nacelle. The geo-location of the two rover receivers 24 is determined and a line through the two geo-locations provides a first bearing line 54. A fixed angle 57 (e.g., a 90-degree angle) between the bearing line 54 and the centerline axis 38 is added/subtracted to the bearing of line 54 to provide the bearing 56 of the centerline axis 38, which corresponds to the heading of the nacelle 14. For example, in the left-hand depiction of Fig. 7, the first bearing line 54 has a bearing of 270-degrees or 090-degrees and the fixed angle 57 is 90-degrees. The bearing of the centerline axis 38 corresponding to the heading of the nacelle is thus North (000°) (270-degrees + 90-degrees or 090-degrees - 90-degrees). The right-hand depiction is another illustration wherein the final heading 56 of the nacelle is determined the same way to be 030°.

Referring to the embodiment of Figs. 4-5 wherein the fixed location corresponds to the TPP, embodiments of the present method may also include determining the geo-location of the TPP as described above a plurality of times over a fixed time period and determining a total displacement trajectory of the TPP over the time period, which may be represented by a vector. The multiple TPP's form the total displacement trajectory which can be combined into a total displacement vector 60 for the monitored time period, the total displacement vector 60 having a side-to-side component 64 and a fore-aft component 62.

As mentioned above, the displacement of the TPP over time may be indicative of various factors affecting tower distortion as well as a reference for tower deflection measurements. TPP changes resulting from tower distortion may be the result of foundation settling, seismic movement, tower shell/flange relaxation, incipient structural failure, and others. Displacements of the tower from the load imparted to the tower from rotor, machine head, and environmental effects can be accurately measured and reported based on movement of the TPP. The total displacement vector 60 or displacement trajectory of TPP can be used for evaluating/determining various tower characteristics, including determination of tower integrity, tower life prediction (longevity), load management, tower maintenance, or changes in operating and maintenance procedures to reduce tower distortion. Based on any one or more of these characteristics, the method includes implementing control actions or procedures to counter any adverse effects on the tower or overall operation of the wind turbine.

Further aspects of the invention are provided by the subject matter of the following clauses:
Clause 1: A method for determining deflection of a tower of a wind turbine, the wind turbine including a nacelle with a machine head and a rotor atop of the tower, the method comprising: establishing a fixed location relative to the tower; detecting a total deflection of a geographic location ("geo-location") of the fixed location; determining components of the total deflection that are generated by non-thrust loads acting on the tower; and subtracting the non-thrust loads deflection components from the total deflection to determine a thrust loads deflection component corresponding to deflection of the tower from operational thrust loads on the rotor.
Clause 2: The clause according to clause 1, wherein the thrust loads deflection component is used directly as a control variable for performing one or more of changing an operating parameter of the wind turbine based on a difference between an expected thrust loads deflection component and the determined thrust loads deflection component; performing a repair or maintenance procedure based on a difference between the expected thrust loads deflection component and the determined thrust loads deflection component; or determining tower or foundation integrity, or making a tower or foundation life prediction, based on a difference between the expected thrust loads deflection component and the determined thrust loads deflection component.
Clause 3: The clause according to any one of clauses 1 through 2, further comprising, from the thrust loads deflection component, determining the rotor thrust resulting from operational loads acting on the rotor, and comparing the determined rotor thrust to an expected rotor thrust for operating conditions of the wind turbine.
Clause 4: The clause according to any one of clauses 1 through 3, further comprising performing at least one of: changing an operating parameter of the wind turbine based on a difference between the expected rotor thrust and the determined rotor thrust; performing a repair or maintenance procedure based on a difference between the expected rotor thrust and the determined rotor thrust; or determining tower or foundation integrity, or making a tower or foundation life prediction, based on a difference between the expected rotor thrust and the determined rotor thrust.
Clause 5: The clause according to any one of clauses 1 through 4, wherein the steps of determining and subtracting the non-thrust loads deflection components from the total deflection comprises generating and applying a tower displacement correction factor to a vector of the total deflection prior to determining the geo-location of the fixed location.
Clause 6: The clause according to any one of clauses 1 through 5, wherein the tower distortion correction factor corrects for tower displacement caused by any one or combination of: weight overhang of the nacelle relative to a vertical axis of the tower; thermal tower distortion caused by temperatures differences between sides of the tower; or tower distortion from transient loads placed on the tower or nacelle.
Clause 7: The clause according to any one of clauses 1 through 6, wherein the step of detecting the total deflection of the geo-location of the fixed location comprises: (a) configuring at least one rover receiver of a global navigation satellite system (GNSS) at a fixed position on the nacelle or on the tower; (b) based on a GNSS geo-location of the rover receiver and a known position of the fixed location relative to the rover receiver, computing, via the controller, the geo-location of the fixed position; and (c) repeating steps (a) through (b) at least once more over a fixed time period and determining a total trajectory or displacement vector of the fixed location over the time period that represents the total deflection of the tower.
Clause 8: The clause according to any one of clauses 1 through 7, wherein the rover receiver is in communication with a fixed base station receiver that transmits correction data to the rover receiver, wherein the GNSS geo-location of the rover is determined relative to the base station.
Clause 9: The clause according to any one of clauses 1 through 8, wherein the GNSS geo-location of the rover is an absolute global latitude and longitude position supplied directly to the rover.
Clause 10: The clause according to any one of clauses 1 through 9, wherein the fixed location corresponds to a tower top pivot point (TPP) of the tower, the step of detecting the total deflection of the geo-location of the TPP of the tower comprises: (a) configuring at least one rover receiver of a global navigation satellite system (GNSS) at a fixed position on the nacelle; (b) conducting a plurality of 360-degree yaw sweeps of the nacelle and recording geo-location signals received by the rover receiver during the yaw sweeps; (c) via a controller, converting the geo-location signals into a circular plot and determining a radius of the circular plot, the radius being a distance between the rover receiver and the TPP; (d) based on a GNSS geo-location of the rover receiver and the radius, computing, via the controller, the geo-location of the TPP; and (e) repeating steps (b) through (d) at least once more over a fixed time period and determining a total trajectory or displacement vector of the TPP over the time period that represents the total deflection of the tower.
Clause 11: The clause according to any one of clauses 1 through 10, wherein the steps of determining and subtracting the non-thrust loads deflection components from the total deflection comprises generating and applying a tower displacement correction factor to the radius from the yaw sweeps prior to determining the geo-location of the TPP.
Clause 12: The clause according to any one of clauses 1 through 11, wherein the tower distortion correction factor corrects for tower displacement caused by any one or combination of: weight overhang of the nacelle relative to a vertical axis of the tower; thermal tower distortion caused by temperatures differences between sides of the tower; or tower distortion from transient loads placed on the tower or nacelle.
Clause 13: The clause according to any one of clauses 1 through 12, wherein the plurality of 360-degree yaw sweeps comprises at least one yaw sweep in a positive direction and at least one yaw sweep in an opposite negative direction.
Clause 14: The clause according to any one of clauses 1 through 13, wherein the plurality of 360-degree yaw sweeps of the nacelle are conducted during low wind speeds so as to minimize transient wind loads that may cause deflection of the tower during the yaw sweeps.
Clause 15: The clause according to any one of clauses 1 through 14, wherein the rover receiver is located atop and at a back end of the nacelle at a predetermined fixed distance ("x") to a centerline axis of the nacelle, wherein the geo-location of the TPP along the centerline axis is computed based on the radius and distance "x".
Clause 16: The clause according to any one of clauses 1 through 15, wherein a plurality of the rover receivers are configured on the nacelle, the location signals from the rover receivers used to generate the circular plot and determine the radius for each of the rover receivers.
Clause 17: A system for determining deflection of a tower of a wind turbine, the wind turbine including a nacelle with a machine head and a rotor atop of the tower, the system comprising: at least one rover receiver of a global navigation satellite system (GNSS) configured at a fixed position on the nacelle or on the tower; a controller in communication with the rover receiver, the controller configured to perform the following operations: detecting a total deflection of a geographic location ("geo-location") of a fixed location on the tower; determining components of the total deflection that are generated by non-thrust loads acting on the tower; and subtracting the non-thrust loads deflection components from the total deflection to determine a thrust loads deflection component corresponding to deflection of the tower from operational thrust loads on the rotor.
Clause 18: The clause according to clause 17, wherein the controller is configured to: (a) based on a GNSS geo-location of the rover receiver and a known position of the fixed location relative to the rover receiver, compute the geo-location of the fixed location; and (b) repeat step (a) at least once more over a fixed time period and determining a total trajectory or displacement vector of the fixed location over the time period that represents the total deflection of the tower.
Clause 19: The clause according to any one of clauses 17 through 18, wherein the rover receiver is at a fixed position on the nacelle and the fixed location corresponds to a tower top pivot point (TPP) of the tower, the controller configured to: (a) receive and record geo-location signals from the rover receiver during a plurality of 360-degree yaw sweeps of the nacelle; (b) convert the geo-location signals into a circular plot and determining a radius of the circular plot, the radius being a distance between the rover receiver and the TPP; (c) based on a GNSS geo-location of the rover receiver and the radius, compute the geo-location of the TPP; and (d) repeating steps (a) through (c) at least once more over a fixed time period and determining a total trajectory or displacement vector of the TPP over the time period that represents the total deflection.
Clause 20: The clause according to any one of clauses 17 through 19, wherein the controller is further configured to apply a tower displacement correction factor to the radius from the yaw sweeps based on one or more of: weight overhang of the nacelle relative to a vertical axis of the tower; thermal tower distortion caused by temperatures differences between sides of the tower; and tower displacement from transient loads placed on the tower or nacelle.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A method for determining deflection of a tower of a wind turbine, the wind turbine including a nacelle with a machine head and a rotor atop of the tower, the method comprising:
establishing a fixed location relative to the tower;
detecting a total deflection of a geographic location ("geo-location") of the fixed location;
determining components of the total deflection that are generated by non-thrust loads acting on the tower; and
subtracting the non-thrust loads deflection components from the total deflection to determine a thrust loads deflection component corresponding to deflection of the tower from operational thrust loads on the rotor.

2. The method according to claim 1, wherein the thrust loads deflection component is used directly as a control variable for performing one or more of:
changing an operating parameter of the wind turbine based on a difference between an expected thrust loads deflection component and the determined thrust loads deflection component;
performing a repair or maintenance procedure based on a difference between the expected thrust loads deflection component and the determined thrust loads deflection component; or
determining tower or foundation integrity, or making a tower or foundation life prediction, based on a difference between the expected thrust loads deflection component and the determined thrust loads deflection component.

3. The method of any of the preceding claims, further comprising, from the thrust loads deflection component, determining the rotor thrust resulting from operational loads acting on the rotor, and comparing the determined rotor thrust to an expected rotor thrust for operating conditions of the wind turbine.

4. The method of any of the preceding claims, further comprising performing at least one of:
changing an operating parameter of the wind turbine based on a difference between the expected rotor thrust and the determined rotor thrust;
performing a repair or maintenance procedure based on a difference between the expected rotor thrust and the determined rotor thrust; or
determining tower or foundation integrity, or making a tower or foundation life prediction, based on a difference between the expected rotor thrust and the determined rotor thrust.

5. The method of any of the preceding claims, wherein the steps of determining and subtracting the non-thrust loads deflection components from the total deflection comprises generating and applying a tower displacement correction factor to a vector of the total deflection prior to determining the geo-location of the fixed location.

6. The method of any of the preceding claims, wherein the tower distortion correction factor corrects for tower displacement caused by any one or combination of: weight overhang of the nacelle relative to a vertical axis of the tower; thermal tower distortion caused by temperatures differences between sides of the tower; or tower distortion from transient loads placed on the tower or nacelle.

7. The method of any of the preceding claims, wherein the step of detecting the total deflection of the geo-location of the fixed location comprises:
(a) configuring at least one rover receiver of a global navigation satellite system (GNSS) at a fixed position on the nacelle or on the tower;
(b) based on a GNSS geo-location of the rover receiver and a known position of the fixed location relative to the rover receiver, computing, via the controller, the geo-location of the fixed position; and
(c) repeating steps (a) through (b) at least once more over a fixed time period and determining a total trajectory or displacement vector of the fixed location over the time period that represents the total deflection of the tower.

8. The method of any of the preceding claims, wherein the rover receiver is in communication with a fixed base station receiver that transmits correction data to the rover receiver, wherein the GNSS geo-location of the rover is determined relative to the base station.

9. The method of any of the preceding claims, wherein the GNSS geo-location of the rover is an absolute global latitude and longitude position supplied directly to the rover.

10. The method of any of the preceding claims, wherein the fixed location corresponds to a tower top pivot point (TPP) of the tower, the step of detecting the total deflection of the geo-location of the TPP of the tower comprises:
(a) configuring at least one rover receiver of a global navigation satellite system (GNSS) at a fixed position on the nacelle;
(b) conducting a plurality of 360-degree yaw sweeps of the nacelle and recording geo-location signals received by the rover receiver during the yaw sweeps;
(c) via a controller, converting the geo-location signals into a circular plot and determining a radius of the circular plot, the radius being a distance between the rover receiver and the TPP;
(d) based on a GNSS geo-location of the rover receiver and the radius, computing, via the controller, the geo-location of the TPP; and
(e) repeating steps (b) through (d) at least once more over a fixed time period and determining a total trajectory or displacement vector of the TPP over the time period that represents the total deflection of the tower.

11. The method of any of the preceding claims, wherein the steps of determining and subtracting the non-thrust loads deflection components from the total deflection comprises generating and applying a tower displacement correction factor to the radius from the yaw sweeps prior to determining the geo-location of the TPP.

12. The method of any of the preceding claims, wherein the tower distortion correction factor corrects for tower displacement caused by any one or combination of: weight overhang of the nacelle relative to a vertical axis of the tower; thermal tower distortion caused by temperatures differences between sides of the tower; or tower distortion from transient loads placed on the tower or nacelle.

13. The method of any of the preceding claims, wherein the plurality of 360-degree yaw sweeps comprises at least one yaw sweep in a positive direction and at least one yaw sweep in an opposite negative direction.

14. The method of any of the preceding claims, wherein the plurality of 360-degree yaw sweeps of the nacelle are conducted during low wind speeds so as to minimize transient wind loads that may cause deflection of the tower during the yaw sweeps.

15. The method of any of the preceding claims, wherein the rover receiver is located atop and at a back end of the nacelle at a predetermined fixed distance ("x") to a centerline axis of the nacelle, wherein the geo-location of the TPP along the centerline axis is computed based on the radius and distance "x".

## Patentansprüche

1. Verfahren zum Bestimmen einer Durchbiegung eines Turms einer Windenergieanlage, wobei die Windenergieanlage eine Gondel mit einem Maschinenkopf und einen Rotor oben auf dem Turm umfasst, wobei das Verfahren umfasst:
Festlegen eines festen Orts relativ zum Turm;
Erfassen einer Gesamt-Durchbiegung eines geographischen Orts ("Geo-Ort") des festen Orts;
Bestimmen von Komponenten der Gesamt-Durchbiegung, die durch nicht schubbezogene Lasten erzeugt werden, die auf den Turm wirken; und
Subtrahieren der Durchbiegungskomponenten durch Nicht-Schublasten von der Gesamt-Durchbiegung, um eine Durchbiegungskomponente durch Schublasten zu bestimmen, die mit der Durchbiegung des Turms durch Betriebsschublasten auf den Rotor korrespondiert.

2. Verfahren nach Anspruch 1, wobei die Durchbiegungskomponente durch Schublasten direkt als Steuergröße verwendet wird zum Durchführen von einem oder mehreren aus:
Ändern eines Betriebsparameters der Windenergieanlage basierend auf einer Differenz zwischen einer erwarteten Durchbiegungskomponente durch Schublasten und der bestimmten Durchbiegungskomponente durch Schublasten;
Durchführen eines Reparatur- oder Wartungsverfahrens basierend auf einer Differenz zwischen der erwarteten Durchbiegungskomponente durch Schublasten und der bestimmten Durchbiegungskomponente durch Schublasten; oder
Bestimmen der Integrität des Turms oder des Fundaments oder Erstellen einer Lebensdauervorhersage für den Turm oder das Fundament basierend auf einer Differenz zwischen der erwarteten Durchbiegungskomponente durch Schublasten und der bestimmten Durchbiegungskomponente durch Schublasten.

3. Verfahren nach einem der vorhergehenden Ansprüche, ferner umfassend, aus der Durchbiegungskomponente durch Schublasten, das Bestimmen des Rotorschubs, der aus auf den Rotor wirkenden Betriebslasten resultiert, und das Vergleichen des bestimmten Rotorschubs mit einem erwarteten Rotorschub für Betriebsbedingungen der Windenergieanlage.

4. Verfahren nach einem der vorhergehenden Ansprüche, ferner umfassend das Durchführen von mindestens einem aus:
Ändern eines Betriebsparameters der Windenergieanlage basierend auf einer Differenz zwischen dem erwarteten Rotorschub und dem bestimmten Rotorschub;
Durchführen eines Reparatur- oder Wartungsverfahrens basierend auf einer Differenz zwischen dem erwarteten Rotorschub und dem bestimmten Rotorschub; oder
Bestimmen der Integrität des Turms oder des Fundaments oder Erstellen einer Lebensdauervorhersage für den Turm oder das Fundament basierend auf einer Differenz zwischen dem erwarteten Rotorschub und dem bestimmten Rotorschub.

5. Verfahren nach einem der vorhergehenden Ansprüche, wobei die Schritte des Bestimmens und Subtrahierens der Durchbiegungskomponenten durch Nicht-Schublasten von der Gesamt-Durchbiegung das Erzeugen und Anwenden eines Turmverschiebungs-Korrekturfaktors auf einen Vektor der Gesamt-Durchbiegung vor dem Bestimmen des Geo-Orts des festen Orts umfassen.

6. Verfahren nach einem der vorhergehenden Ansprüche, wobei der Turmverformungs-Korrekturfaktor eine Turmverschiebung korrigiert, die verursacht wird durch irgendeine eine oder Kombination aus: Gewichtsüberhang der Gondel relativ zu einer vertikalen Achse des Turms; thermische Turmverformung, die durch Temperaturunterschiede zwischen Seiten des Turms verursacht wird; oder Turmverformung durch transiente Lasten, die auf den Turm oder die Gondel ausgeübt werden.

7. Verfahren nach einem der vorhergehenden Ansprüche, wobei der Schritt des Erfassens der Gesamt-Durchbiegung des Geo-Orts des festen Orts umfasst:
(a) Konfigurieren mindestens eines Rover-Empfängers eines globalen Navigationssatellitensystems (GNSS) an einer festen Position auf der Gondel oder auf dem Turm;
(b) basierend auf einem GNSS-Geo-Ort des Rover-Empfängers und einer bekannten Position des festen Orts relativ zum Rover-Empfänger, Berechnen des Geo-Orts der festen Position über die Steuerung; und
(c) Wiederholen der Schritte (a) bis (b) mindestens noch einmal über eine feste Zeitspanne und Bestimmen einer Gesamttrajektorie oder eines Verschiebungsvektors des festen Orts über die Zeitspanne, der die Gesamt-Durchbiegung des Turms darstellt.

8. Verfahren nach einem der vorhergehenden Ansprüche, wobei der Rover-Empfänger in Kommunikation mit einem festen Basisstations-Empfänger steht, der Korrekturdaten an den Rover-Empfänger überträgt, wobei der GNSS-Geo-Ort des Rovers relativ zur Basisstation bestimmt wird.

9. Verfahren nach einem der vorhergehenden Ansprüche, wobei der GNSS-Geo-Ort des Rovers eine absolute globale Breitengrad- und Längengrad-Position ist, die direkt an den Rover geliefert wird.

10. Verfahren nach einem der vorhergehenden Ansprüche, wobei der feste Ort einem Turmspitzen-Drehpunkt (TPP) des Turms entspricht, wobei der Schritt des Erfassens der Gesamt-Durchbiegung des Geo-Orts des TPP des Turms umfasst:
(a) Konfigurieren mindestens eines Rover-Empfängers eines globalen Navigationssatellitensystems (GNSS) an einer festen Position auf der Gondel;
(b) Durchführen einer Vielzahl von 360-Grad-Gierschwenks der Gondel und Aufzeichnen von Geo-Ort-Signalen, die vom Rover-Empfänger während der Gierschwenks empfangen werden;
(c) über eine Steuerung, Umwandeln der Geo-Ort-Signale in ein Kreisdiagramm und Bestimmen eines Radius des Kreisdiagramms, wobei der Radius ein Abstand zwischen dem Rover-Empfänger und dem TPP ist;
(d) basierend auf einem GNSS-Geo-Ort des Rover-Empfängers und dem Radius, Berechnen des Geo-Orts des TPP über die Steuerung; und
(e) Wiederholen der Schritte (b) bis (d) mindestens noch einmal über eine feste Zeitspanne und Bestimmen einer Gesamttrajektorie oder eines Verschiebungsvektors des TPP über die Zeitspanne, der die Gesamt-Durchbiegung des Turms darstellt.

11. Verfahren nach einem der vorhergehenden Ansprüche, wobei die Schritte des Bestimmens und Subtrahierens der Durchbiegungskomponenten durch Nicht-Schublasten von der Gesamt-Durchbiegung das Erzeugen und Anwenden eines Turmverschiebungs-Korrekturfaktors auf den Radius aus den Gierschwenks vor dem Bestimmen des Geo-Orts des TPP umfassen.

12. Verfahren nach einem der vorhergehenden Ansprüche, wobei der Turmverformungs-Korrekturfaktor eine Turmverschiebung korrigiert, die verursacht wird durch irgendeine eine oder Kombination aus: Gewichtsüberhang der Gondel relativ zu einer vertikalen Achse des Turms; thermische Turmverformung, die durch Temperaturunterschiede zwischen Seiten des Turms verursacht wird; oder Turmverformung durch transiente Lasten, die auf den Turm oder die Gondel ausgeübt werden.

13. Verfahren nach einem der vorhergehenden Ansprüche, wobei die Vielzahl von 360-Grad-Gierschwenks mindestens einen Gierschwenk in einer positiven Richtung und mindestens einen Gierschwenk in einer entgegengesetzten negativen Richtung umfasst.

14. Verfahren nach einem der vorhergehenden Ansprüche, wobei die Vielzahl von 360-Grad-Gierschwenks der Gondel während niedriger Windgeschwindigkeiten durchgeführt wird, um transiente Windlasten zu minimieren, die während der Gierschwenks eine Durchbiegung des Turms verursachen können.

15. Verfahren nach einem der vorhergehenden Ansprüche, wobei sich der Rover-Empfänger oben und an einem hinteren Ende der Gondel in einem vorgegebenen festen Abstand ("x") zu einer Mittellinienachse der Gondel befindet, wobei der Geo-Ort des TPP entlang der Mittellinienachse basierend auf dem Radius und dem Abstand "x" berechnet wird.

## Revendications

1. Procédé permettant de déterminer la déviation d'une tour d'une éolienne, l'éolienne comportant une nacelle avec une tête de machine et un rotor au sommet de la tour, le procédé comprenant :
l'établissement d'un emplacement fixe par rapport à la tour ;
la détection d'une déviation totale d'un emplacement géographique (« géolocalisation ») de l'emplacement fixe ;
la détermination des composantes de la déviation totale qui sont générées par des charges sans poussée agissant sur la tour ; et
la soustraction des composantes de déviation des charges sans poussée de la déviation totale pour déterminer une composante de déviation des charges de poussée correspondant à la déviation de la tour par rapport aux charges de poussée fonctionnelle sur le rotor.

2. Procédé selon la revendication 1, dans lequel la composante de déviation des charges de poussée est utilisée directement comme variable de commande pour réaliser une ou plusieurs parmi :
la modification d'un paramètre de fonctionnement de l'éolienne sur la base d'une différence entre une composante de déviation des charges de poussée attendue et la composante de déviation des charges de poussée déterminée ;
la réalisation d'une procédure de réparation ou de maintenance sur la base d'une différence entre la composante de déviation des charges de poussée attendue et la composante de déviation des charges de poussée déterminée ; ou
la détermination de l'intégrité d'une tour ou d'une fondation, ou la création d'une prédiction de la durée de vie d'une tour ou d'une fondation, sur la base d'une différence entre la composante de déviation des charges de poussée attendue et la composante de déviation des charges de poussée déterminée.

3. Procédé selon l'une quelconque des revendications précédentes, comprenant en outre, à partir de la composante de déviation des charges de poussée, la détermination de la poussée de rotor résultant des charges fonctionnelles agissant sur le rotor, et la comparaison de la poussée de rotor déterminée à une poussée de rotor attendue dans les conditions de fonctionnement de l'éolienne.

4. Procédé selon l'une quelconque des revendications précédentes, comprenant en outre la réalisation d'au moins l'un parmi :
la modification d'un paramètre de fonctionnement de l'éolienne sur la base d'une différence entre la poussée de rotor attendue et la poussée de rotor déterminée ;
la réalisation d'une procédure de réparation ou de maintenance sur la base d'une différence entre la poussée de rotor attendue et la poussée de rotor déterminée ; ou
la détermination de l'intégrité d'une tour ou d'une fondation, ou la création d'une prédiction de durée de vie d'une tour ou d'une fondation, sur la base d'une différence entre la poussée de rotor attendue et la poussée de rotor déterminée.

5. Procédé selon l'une quelconque des revendications précédentes, dans lequel les étapes consistant à déterminer et à soustraire les composantes de déviation des charges sans poussée de la déviation totale comprennent la génération et l'application d'un facteur de correction de déplacement de tour à un vecteur de la déviation totale avant de déterminer la géolocalisation de l'emplacement fixe.

6. Procédé selon l'une quelconque des revendications précédentes, dans lequel le facteur de correction de distorsion de tour corrige le déplacement de tour causé par l'un quelconque ou une combinaison parmi : le surplomb de poids de la nacelle par rapport à un axe vertical de la tour ; la distorsion thermique de tour provoquée par des différences de température entre des côtés de la tour ; ou la déviation de tour à partir de charges transitoires placées sur la tour ou la nacelle.

7. Procédé selon l'une quelconque des revendications précédentes, dans lequel l'étape consistant à détecter la déviation totale de la géolocalisation de l'emplacement fixe comprend :
(a) la configuration d'au moins un récepteur d'astromobile d'un système mondial de navigation par satellite (GNSS) à une position fixe sur la nacelle ou sur la tour ;
(b) sur la base d'une géolocalisation GNSS du récepteur d'astromobile et d'une position connue de l'emplacement fixe par rapport au récepteur d'astromobile, le calcul, par l'intermédiaire du dispositif de commande, de la géolocalisation de la position fixe ; et
(c) la répétition des étapes (a) à (b) au moins une fois de plus sur une période de temps fixe et la détermination d'une trajectoire totale ou un vecteur de déplacement de l'emplacement fixe sur la période de temps qui représente la déviation totale de la tour.

8. Procédé selon l'une quelconque des revendications précédentes, dans lequel le récepteur d'astromobile est en communication avec un récepteur de station de base fixe qui transmet des données de correction au récepteur d'astromobile, dans lequel la géolocalisation GNSS de l'astromobile est déterminée par rapport à la station de base.

9. Procédé selon l'une quelconque des revendications précédentes, dans lequel la géolocalisation GNSS de l'astromobile est une position absolue de latitude et de longitude globale fournie directement à l'astromobile.

10. Procédé selon l'une quelconque des revendications précédentes, dans lequel l'emplacement fixe correspond à un point de pivotement de sommet de tour (TPP) de la tour, l'étape consistant à détecter la déviation totale de la géolocalisation du TPP de la tour comprend :
(a) la configuration d'au moins un récepteur d'astromobile d'un système mondial de navigation par satellite (GNSS) à une position fixe sur la nacelle ;
(b) la conduite d'une pluralité de balayages de lacet à 360 degrés de la nacelle et l'enregistrement de signaux de géolocalisation reçus par le récepteur d'astromobile pendant les balayages de lacet ;
(c) par l'intermédiaire d'un dispositif de commande, la conversion des signaux de géolocalisation en un tracé circulaire et la détermination d'un rayon du tracé circulaire, le rayon étant une distance entre le récepteur d'astromobile et le TPP ;
(d) sur la base d'une géolocalisation GNSS du récepteur d'astromobile et du rayon, le calcul, par l'intermédiaire du dispositif de commande, de la géolocalisation GNSS du TPP ; et
(e) la répétition des étapes (b) à (d) au moins une fois de plus sur une période de temps fixe et la détermination d'une trajectoire totale ou d'un vecteur de déplacement du TPP sur la période de temps qui représente la déviation totale de la tour.

11. Procédé selon l'une quelconque des revendications précédentes, dans lequel les étapes consistant à déterminer et à soustraire les composantes de déviation des charges sans poussée de la déviation totale comprennent la génération et l'application d'un facteur de correction de déplacement de tour au rayon des balayages de lacet avant de déterminer la géolocalisation du TPP.

12. Procédé selon l'une quelconque des revendications précédentes, dans lequel le facteur de correction de distorsion de tour corrige le déplacement de tour causé par l'un quelconque ou une combinaison parmi : le surplomb de poids de la nacelle par rapport à un axe vertical de la tour ; la distorsion thermique de tour provoquée par des différences de température entre des côtés de la tour ; ou la déviation de tour à partir de charges transitoires placées sur la tour ou la nacelle.

13. Procédé selon l'une quelconque des revendications précédentes, dans lequel la pluralité de balayages de lacet à 360 degrés comprend au moins un balayage de lacet dans une direction positive et au moins un balayage de lacet dans une direction négative opposée.

14. Procédé selon l'une quelconque des revendications précédentes, dans lequel la pluralité de balayages de lacet à 360 degrés de la nacelle sont conduits pendant de faibles vitesses de vent de manière à minimiser des charges de vent transitoires qui peuvent provoquer une déviation de la tour pendant les balayages de lacet.

15. Procédé selon l'une quelconque des revendications précédentes, dans lequel le récepteur d'astromobile est situé au sommet et à l'arrière de la nacelle à une distance fixe prédéterminée (« x ») d'un axe central de la nacelle, dans lequel la géolocalisation du TPP le long de l'axe central est calculée sur la base du rayon et de la distance « x ».
